# EUROPÄISCHE PATENTSCHRIFT

(11) **EP 2 446 300 B1**
(45) Veröffentlichungstag und Bekanntmachung des Hinweises auf die Patenterteilung: **12.10.2016**
(21) Anmeldenummer: 10724242.2
(22) Anmeldetag: 14.06.2010
(51) Int. Cl.: G01S 17/66, G01S 17/02, G01S 5/16

(54) **TRACKING-VERFAHREN UND MESSSYSTEM MIT LASERTRACKER**
TRACKING METHOD AND MEASURING SYSTEM HAVING A LASER TRACKER
PROCÉDÉ DE SUIVI ET SYSTÈME DE MESURE POURVU D'UN APPAREIL DE SUIVI LASER

(30) Priorität: 23.06.2009 CH 9732009
(43) Veröffentlichungstag der Anmeldung: 02.05.2012
(73) Patentinhaber: Leica Geosystems AG, 9435 Heerbrugg (CH)
(72) Erfinder: MOSER, Daniel, CH-5707 Seengen (CH); MARTIN, Joel, CH-5000 Aarau (CH); VON ARB, Konrad, CH-4612 Wangen bei Olten (CH)
(74) Vertreter: Kaminski Harmann
(86) Internationale Anmeldenummer: PCT/CH2010/000154
(87) Internationale Veröffentlichungsnummer: WO 2010/148526

(56) Entgegenhaltungen:
- WO-A1-2007/079600
- WO-A1-2007/079601
- US-B2- 7 292 788

## Beschreibung

Die Erfindung liegt im Gebiete der Messtechnik und betrifft ein Tracking-Verfahren und ein Messsystem mit Lasertracker nach den Oberbegriffen der entsprechenden Patentansprüche. Das Tracking-Verfahren dient zur automatischen Verfolgung eines Zielpunktes, insbesondere eines sich bewegenden Zielpunktes, mit dem Messstrahl eines Lasertrackers. Das Messsystem mit Lasertracker ist ausgerüstet für die Durchführung des Verfahrens.

### STAND DER TECHNIK

Zur Messung der Position von sich bewegenden Zielpunkten werden vielfach sogenannte Lasertracker eingesetzt. Unter dem Begriff Lasertracker werden Vorrichtungen verstanden, die mindestens einen mit einem fokussierten Laserstrahl (in der folgenden Beschreibung mit Messstrahl bezeichnet) arbeitenden Distanzmesser aufweisen. Beispielsweise mit Hilfe eines um zwei Achsen drehbaren Spiegels wird die Richtung des Messstrahles auf den Zielpunkt eingestellt und mit den Drehachsen zugeordneten Winkelgebern erfasst. Der zu vermessende Zielpunkt wird mit einem Retroreflektor (insbesondere Würfeleckenprisma oder Anordnung von drei senkrecht aufeinander stehenden Spiegeln) versehen, wobei der Retroreflektor den darauf treffenden Messstrahl des Lasertrackers zu diesem zurück reflektiert. Dabei verläuft der reflektierte Messstrahl koaxial zum emittierten Messstrahl, wenn der Messstrahl genau zentrisch auf den Reflektor trifft, und parallel versetzt dazu, wenn der Messstrahl nicht zentrisch auf den Reflektor trifft. Je nach Ausführungsform des Trackers wird aus einem Vergleich des ausgesandten und reflektierten Laserlichtes auf eine absolute Distanz zwischen Lasertracker und Zielpunkt und/oder auf eine Veränderung dieser Distanz geschlossen. Aus den von den Winkelgebern erfassten Winkeln und der vom Distanzmesser detektierten Distanz wird die Position des Reflektors bzw. des Zielpunktes relativ zum Tracker berechnet.

Ein Teil des reflektierten Messstrahls wird üblicherweise auf eine PSD (position sensitive device) geleitet. Aus der Position, in der der reflektierte Messstrahl auf die lichtempfindliche Fläche der PSD trifft, wird auf die parallele Verschiebung des reflektierten relativ zum emittierten Messstrahl geschlossen. Die dadurch ermittelten Messdaten definieren den parallelen Versatz des reflektierten Messstrahles und werden verwendet für eine Steuerung der Messstrahl-Richtung derart, dass der Messstrahl dem Zielpunkt folgt (tracking), wenn sich dieser bewegt. Das heisst, es wird durch entsprechende Veränderung der Messstrahlrichtung bzw. der Ausrichtung des den Messstrahl ausrichtenden Spiegels dafür gesorgt, dass der parallele Versatz zwischen emittiertem und reflektiertem Messstrahl verkleinert wird bzw. möglichst klein bleibt.

Es ist offensichtlich, dass die Steuerung der Messstrahlrichtung anhand des parallelen Versatzes zwischen emittiertem und reflektiertem Messstrahl eine zwar geringe aber nicht vernachlässigbare Verzögerung aufweist, welche die Geschwindigkeit beschränkt, mit der ein Zielpunkt sich bewegen und dabei verfolgt werden kann. Bewegt sich der Zielpunkt schneller, trifft der Messstrahl, bevor seine Richtung entsprechend korrigiert werden kann, nicht mehr auf den Reflektor und sowohl Tracking als auch Positionsmessung werden dadurch unterbrochen. Dasselbe kann geschehen, wenn ein Hindernis zwischen Tracker und Zielpunkt gerät, so dass der Messstrahl unterbrochen wird. Wenn der Lasertracker bzw. der Messstrahl des Lasertrackers den Reflektor "verliert", wird die Bedienungsperson darauf aufmerksam gemacht und bei entsprechender Ausrüstung des Trackers kann eine Suchroutine gestartet werden.

Sobald der Zielpunkt wieder "gefunden" ist, das heisst, der Messstrahl erneut auf den Reflektor fällt und von diesem reflektiert wird, kann die Messung der Position des Zielpunktes und seine Verfolgung durch den Messstrahl wieder aufgenommen werden, wofür gegebenenfalls die Distanzmessung neu initiiert werden muss. Die genannten Tracking-Unterbrüche sind um so häufiger, je weniger kontrolliert die Bewegungen des Zielpunktes sind und je kleiner der verwendete Reflektor und der Durchmesser des Messstrahles sind. Die gleichen Bedingungen wie während den genannten Tracking-Unterbrüchen herrschen üblicherweise auch zu Beginn eines Messprozesses, wenn der Tracker überhaupt noch nicht auf den Zielpunkt eingestellt ist.

Es ist auch bekannt, Lasertracker mit einem Übersichtsgerät zu versehen. Diese Kamera, die ein möglichst grosses Blickfeld (beispielsweise über ± 20° in allen Richtungen) aufweist, ist auf dem Tracker angeordnet und derart ausgerichtet, dass der Messstrahl auf einen auf dem Kamerabild erkannten Zielpunkt gerichtet werden kann. Die Ausrichtung des Messstrahles auf diesen Zielpunkt wird von einer das Kamerabild betrachtenden Bedienungsperson initiiert, indem diese den Bildbereich, in dem der Zielpunkt abgebildet ist, entsprechend bezeichnet.

In WO 2007/079601 A1 ist ein Tracking-Verfahren und ein Messsystem mit Lasertracker beschrieben, welches zwei Tracking-Modi aufweist und das Messsystem von einem der Tracking-Modi in den anderen schaltet, wenn der Messstrahl des Lasertrackers den Zielpunkt "verliert", bzw. diesen "wiedergefunden" hat. Der normale oder ordentliche Tracking-Modus ist das für Lasertracker bekannte Tracking, das auf dem Messstrahl basiert, in dem also beispielsweise der parallele Versatz zwischen emittiertem und reflektiertem Messstrahl detektiert und durch Änderung der Messstrahlrichtung eine Verkleinerung dieses Versatzes angestrebt wird. Im normalen Tracking-Modus detektiert der Tracker den vom Reflektor reflektierten Messstrahl und eine Bestimmung der Zielpunktposition ist jederzeit möglich. Im ausserordentlichen Tracking-Modus, in dem das Messsystem arbeitet, wenn der Tracker den reflektierten Messstrahl nicht detektieren kann, wird die Änderung der Messstrahlrichtung gesteuert anhand von Daten, die von einem dem Lasertracker zugeordneten Übersichtsgerät aufgenommen werden. Das Übersichtsgerät ist beispielsweise eine Bilddaten liefernde, digitale Übersichtskamera mit einer lichtempfindlichen Fläche (z.B. CCD) und einer Optik, die der Übersichtskamera einen für ein Übersichtsgerät üblichen Blickwinkel von beispielsweise ± 20° in allen Richtungen gibt. Das Übersichtsgerät kann aber beispielsweise auch eine mit einer gleichen oder ähnlichen Optik ausgerüstete PSD (position sensitive device) sein, die lediglich Positionsdaten bezüglich des Sensors, also Richtungsdaten bezüglich des Gerätes liefert. Aus den vom Überblicksgerät registrierten Daten wird eine Richtung zum Reflektor bestimmt und mit einer entsprechenden Veränderung der Messstrahlrichtung wird versucht, diesen auf den Reflektor zu richten. Der ausserordentliche Tracking-Modus arbeitet also ohne Detektion des reflektierten Messstrahles und eine exakte Bestimmung der Position des Zielpunktes mit Hilfe des Trackers ist im ausserordentlichen Tracking-Modus nicht möglich. Der ausserordentliche Tracking-Modus wird eingeschaltet, sobald im Tracker kein reflektierter Messstrahl detektiert wird. Im ausserordentlichen Tracking-Modus wird aber immer wieder überprüft, ob ein reflektierter Messstrahl detektiert wird oder nicht, und sobald dies der Fall ist, schaltet sich das System wieder in den ordentlichen Tracking-Modus und wird die Positionsmessung freigeschaltet.

Die beschriebene Vorrichtung und das entsprechende Verfahren können also einen "verlorenen" Zielpunkt wieder lokalisieren und danach wieder die Position des Zielpunktes wieder bestimmen. Sind aber in ihrer Fähigkeit, schnellen Änderungen in der Winkelposition des Zielpunktes bezüglich des Trackers zu folgen, begrenzt. Dies ist insbesondere dann relevant, wenn sich der Zielpunkt nahe beim Tracker befindet, und eine gegebene absolute Positionsänderung - verglichen mit einem weiter entfernten Zielpunkt - einer grösseren Änderung des Winkels entspricht, unter welchem der Zielpunkt vom Tracker aus gesehen wird. Weiter ist erforderlich, dass der Zielpunkt zum Lokalisieren relativ ruhig gehalten werden muss, bis das Einfangen abgeschlossen und die Positionsmessung wieder aktiviert werden kann.

Ähnliche Trackingverfahren unter Verwendung von Kameras oder Sensoren mit engem und weitem Blickwinkel sind auch in den folgenden drei Veröffentlichungen beschrieben:
EP 2 071 283 A2 beschreibt die Verwendung von zwei separaten Kameras mit weitem und engem Blickwinkel, jeweils mit eigener, in die Kameraoptik eingekoppelter Lichtquelle. Die Kameras sind separat voneinander angeordnet, eine davon mit der Blickachse kollinear zu einem Distanzmesser, und arbeiten mit sichtbarem Licht. Eine Zielerkennung wird jeweils durch Ein/Ausschalten der jeweiligen Lichtquelle und anschliessender Differenzbildung aus den entsprechenden Bildern bewerkstelligt.

WO 2009/046763 A1 zeigt zwei Stufen bei der Zielverfolgung, wobei zwischen einer "close range setting" einer Optik, mit einem weiten Blickwinkel, und einer "long range setting" mit engem Blickwinkel umgeschaltet wird.

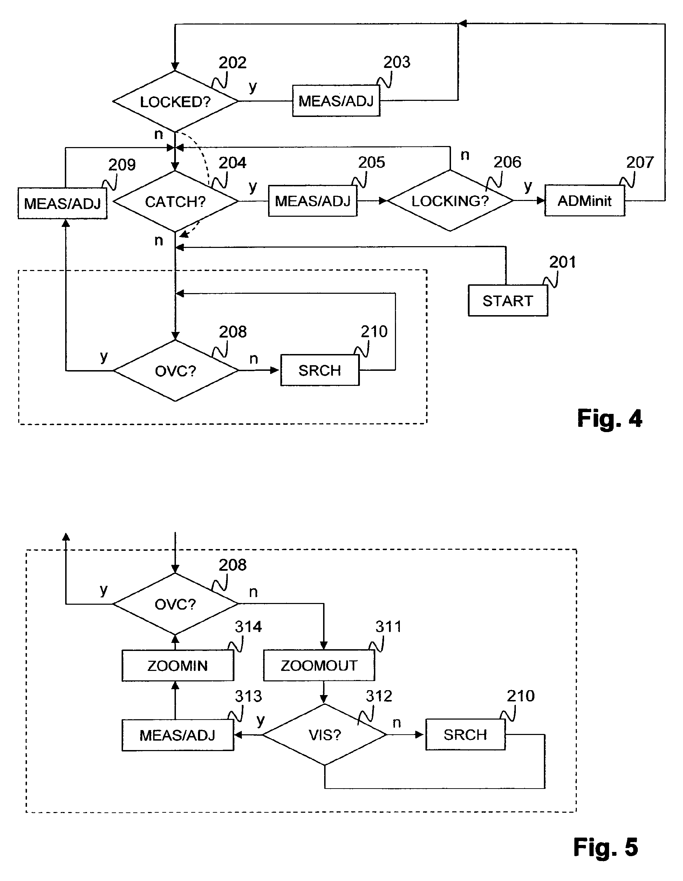

US 7,292,788 B2 beschreibt eine laserbasierte Kommunikation mit einem Satelliten, wobei ein empfangener Lichtstrahl mit "wide field" und "narrow field"-Sensoren verfolgt wird. Fig. 4B zeigt ein Gerät für eine zweistufige Messung: um einen Laserstrahl in eine Fiberoptik (640) zu leiten, wird entweder ein "intermediate/aquisition track" sensor (660) oder ein "fine track quad cell" (650) eingesetzt. Andere Ausführungsformen oder experimentelle Anordnungen (Fig. 4A) verwenden ebenfalls zweistufige Verfahren.

### DARSTELLUNG DER ERFINDUNG

Es ist nun die Aufgabe der Erfindung, ein Tracking-Verfahren und ein für das Tracking-Verfahren ausgerüstetes Messsystem mit Lasertracker zu schaffen, welche ermöglichen, die oben angesprochenen Tracking-Unterbrüche nicht nur automatisch sondern auch mit einer hohen Dynamik zu überbrücken. Eine weitere Aufgabe ist, die Möglichkeit zu schaffen, bei einem Tracking-Unterbruch den Zielpunkt wieder einzufangen, und die Positionsmessung wieder zu starten, währenddem der Zielpunkt bewegt wird. Eine weitere Aufgabe ist, ein Messystem zu schaffen, welches einen vergleichsweise grossen Öffnungswinkel der Übersichtskamera zulässt.

Diese Aufgabe wird gelöst durch das Tracking-Verfahren und das Messsystem mit Lasertracker, wie sie in den Patentansprüchen definiert sind.

In dem **Tracking-Verfahren** wird also ein mit einem Reflektor ausgerüstetes Ziel von einem Messstrahl eines Lasertrackers verfolgt. In einem normalen Tracking-Modus wird in einer Trackingeinheit der vom Reflektor reflektierte Messstrahl detektiert und aus der Detektion eine Grösse zur Steuerung der Ausrichtung des Messstrahles berechet. In einem ausserordentlichen Tracking-Modus, in welchem in der Trackingeinheit der vom Reflektor reflektierte Messstrahl nicht detektiert wird, werden Grössen zur Steuerung der Ausrichtung des Messstrahles aus Daten berechnet, die von mindestens einem weiteren Gerät erfasst werden. Dabei weist der Lasertracker eine Einfangeinheit und ein Übersichtsgerät auf, wobei sowohl die Einfangeinheit als auch das Übersichtsgerät eine relativ zum Messstrahl bekannte Position und Orientierung aufweisen Die Einfangeinheit weist einen Erfassungsbereich oder Erfassungswinkel auf, welcher zwischen dem Erfassungsbereich der Trackingeinheit und dem Erfassungsbereich des Übersichtsgerätes liegt.

Das Verfahren führt im ausserordentlichen Tracking-Modus die folgenden Schritte aus:
▪ falls das Ziel durch die Einfangeinheit erfassbar ist, Steuerung der Ausrichtung des Messstrahles nach Massgabe eines Winkels, unter welchem das Ziel für die Einfangeinheit sichtbar ist, und Überprüfen, ob das Ziel für die Trackingeinheit erfassbar ist;
▪ falls dann das Ziel für die Trackingeinheit erfassbar ist, Übergang zum normalen Tracking-Modus;
▪ falls das Ziel nur für das Übersichtsgerät erfassbar ist, Steuerung der Ausrichtung des Messstrahles nach Massgabe eines Winkels, unter welchem das Ziel für das Übersichtsgerät sichtbar ist, und Überprüfen, ob das Ziel für die Einfangeinheit erfassbar ist.

Mit anderen Worten werden also im ausserordentlichen Tracking-Modus die Grössen zur Steuerung der Ausrichtung des Messstrahles aus Daten berechnet, welche wahlweise von der Einfangeinheit oder von dem Übersichtsgerät erfasst werden, und es wird, wenn nötig, zwischen der Lokalisierung des Zieles mit der Einfangeinheit und dem Übersichtsgerät gewechselt, bis das Ziel mit der Trackingeinheit erfasst wird. Die beschriebenen Schritte werden also wiederholt ausgeführt, bis der Übergang zum normalen Tracking-Modus erfolgt.

Dadurch ist der Öffnungswinkel respektive das Sichtfeld der Übersichtskamera nicht mehr dadurch begrenzt, dass die Auflösung der Übersichtskamera ausreichend hoch sein muss, damit das Ziel sicher durch den Tracker eingefangen werden kann. Die zwischengeschaltete Einfangeinheit fängt das Ziel anhand der Daten der Übersichtskamera ein, und verfeinert die Ausrichtung des Trackers so, dass das Ziel durch den Tracker eingefangen wird.

Dadurch wird es möglich, den Blickwinkel oder Erfassungsbereich des Übersichtsgerätes zu erhöhen, so dass auch bei schnellen Änderungen des Winkels, unter welchen das Messgerät das Ziel sieht, dem Ziel zu folgen, also vor allem, wenn das Ziel nahe am Messgerät bewegt wird.

Falls das Ziel nur für das Übersichtsgerät erfassbar ist, kann theoretisch anstelle der Ausrichtung des Messstrahles zunächst auch nur eine Ausrichtung der Einfangeinheit vorgenommen werden. Da in der Regel aber die Einfangeinheit und die Trackingeinheit miteinander bewegt werden, ist dies auch in der Regel gleichbedeutend mit der Ausrichtung des Messstrahles.

In einer bevorzugten Ausführungsform der Erfindung wird beim Übergang zum normalen Tracking-Modus eine Absolutdistanzinitialisierung ("on the fly") zum Bestimmen einer Absolutdistanz zwischen Lasertracker und Ziel durchgeführt. Ein solches Verfahren ist beispielsweise in den veröffentlichten Patentanmeldungen EP 1 647 838 A1 und US 2009/0033945 beschrieben. Damit ist nach Azimuth und Elevation des Zieles (bezüglich des Lasertrackers) auch dessen Abstand bekannt.

In einer weiteren bevorzugten Ausführungsform der Erfindung weist das Übersichtsgerät eine Zoomfunktion und damit einen verstellbaren Erfassungswinkel auf, und es werden, falls das Ziel bei einem kleinen Erfassungswinkel nicht für das Übersichtsgerät erfassbar ist, die folgenden Schritte durchgeführt:
▪ Vergrössern des Erfassungswinkels des Übersichtsgerätes, und Überprüfen, ob das Ziel für das Übersichtsgerät erfassbar ist;
▪ falls das Ziel für das Übersichtsgerät erfassbar ist, Steuerung der Ausrichtung des Messstrahles nach Massgabe des Winkels, unter welchem das Ziel für das Übersichtsgerät sichtbar ist; und
▪ Verkleinern des Erfassungswinkels des Übersichtsgerätes; oder
▪ optional, falls das Ziel für das Übersichtsgerät nicht erfassbar ist, Ausführen einer Suchroutine zur Lokalisierung des Ziels durch Bewegen des Übersichtsgerätes.

In einer anderen bevorzugten Ausführungsform der Erfindung sind mittels einer Umlenkeinrichtung wahlweise
▪ entweder, in einer ersten Betriebsart der Umlenkeinrichtung, die Trackingeinheit und die Einfangeinheit,
▪ oder, in einer zweiten Betriebsart der Umlenkeinrichtung, das Übersichtsgerät mit ihrem Strahlengang auf das Ziel ausrichtbar oder lenkbar. Dabei weist das Verfahren die folgenden weiteren Schritte auf:
▪ Arbeiten in der ersten Betriebsart, oder Wechsel zur ersten Betriebsart, wenn die Trackingeinheit oder die Einfangeinheit das Ziel erfassen oder suchen;
▪ Arbeiten in der zweiten Betriebsart, oder Wechsel zur zweiten Betriebsart, wenn das Übersichtsgerät das Ziel erfasst oder sucht.

In dieser bevorzugten Ausführungsform der Erfindung ist also das Ziel nicht gleichzeitig für die Trackingeinheit und das Übersichtsgerät sichtbar, beispielsweise weil mittels eines Tracking-Spiegels wahlweise der Strahlengang entweder der Trackingeinheit oder des Übersichtsgerätes auf das Ziel gerichtet werden kann. Bei dieser Ausführungsform wäre es - ohne die Einfangeinheit - möglich, dass ein bewegtes Ziel zwar mit dem Übersichtsgerät lokalisiert wird, und die Ausrichtung des Messtrahles entsprechend korrigiert wird, aber dass nach dem Umklappen des Tracking-Spiegels aufgrund der Zeitverzögerung diese Ausrichtung nicht mehr korrekt ist. Hier erlaubt die Einfangeinheit auch bei einer ungenauen Ausrichtung nach dem Umklappen des Spiegels das Einfangen des Zieles.

In dem **Messsystem mit Lasertracker,** ist ein mit einem Reflektor ausgerüstetes Ziel von einem Messstrahl eines Lasertrackers verfolgbar. Der Lasertracker ist dazu ausgerüstet, in einem normalen Tracking-Modus mit einer Trackingeinheit den vom Reflektor reflektierten Messstrahl zu detektieren, und aus der Detektion eine Grösse zur Steuerung der Ausrichtung des Messstrahles zu berechnen, wobei zusätzlich der Lasertracker dazu ausgerüstet ist, in einem ausserordentlichen Tracking-Modus, in welchem in der Trackingeinheit der vom Reflektor reflektierte Messstrahl nicht detektierbar ist, Grössen zur Steuerung der Ausrichtung des Messstrahles aus Daten zu berechnen, welche von mindestens einem weiteren Gerät erfasst sind. Dabei weist der Lasertracker eine Einfangeinheit und ein Übersichtsgerät auf, wobei sowohl die Einfangeinheit als auch das Übersichtsgerät eine relativ zum Messstrahl bekannte Position und Orientierung aufweisen. Die Einfangeinheit weist einen Erfassungsbereich auf, welcher zwischen dem Erfassungsbereich der Trackingeinheit und dem Erfassungsbereich des Übersichtsgerätes liegt. Der Lasertracker ist dazu ausgerüstet, im ausserordentlichen Tracking-Modus die oben beschriebenen Verfahrensschritte auszuführen.
▪ falls das Ziel durch die Einfangeinheit erfassbar ist, die Ausrichtung des Messstrahles nach Massgabe eines Winkels zu steuern, unter welchem Winkel das Ziel für die Einfangeinheit sichtbar ist, und zu Überprüfen, ob das Ziel für die Trackingeinheit erfassbar ist;
▪ falls das Ziel für die Trackingeinheit erfassbar ist, einen Übergang zum normalen Tracking-Modus einzuleiten;
▪ falls das Ziel nur für das Übersichtsgerät erfassbar ist, die Ausrichtung des Messstrahles nach Massgabe eines Winkels zu steuern, unter welchem das Ziel für das Übersichtsgerät sichtbar ist, und zu Überprüfen, ob das Ziel für die Einfangeinheit erfassbar ist.

In einer bevorzugten Ausführungsform der Erfindung verwendet die Einfangeinheit denselben Messstrahl wie die Trackingeinheit zur Bestimmung der Position des Reflektors in ihrem Blickfeld. Alternativ kann die Einfangeinheit selber Messlicht aussenden, welches (ausserhalb des Lasertrackers) koaxial zum Messstrahl der Trackingeinheit verläuft und mit diesem durch eine gemeinsame Austrittsoptik tritt. In einer weiteren bevorzugten Ausführungsform der Erfindung ist der Strahlengang des Messstrahles - und des Messlichtes der Einfangeinheit, falls dieses nicht identisch mit dem Messstrahl ist - durch eine Umlenkeinrichtung auf das Ziel lenkbar. Dann können mittels der Umlenkeinrichtung wahlweise
▪ entweder, in einer ersten Betriebsart der Umlenkeinrichtung, die Trackingeinheit und die Einfangeinheit,
▪ oder, in einer zweiten Betriebsart der Umlenkeinrichtung, das Übersichtsgerät mit ihrem Strahlengang auf das Ziel ausgerichtet werden.

In anderen bevorzugten Ausführungsformen der Erfindung sendet die Einfangeinheit Messlicht aus, welches parallel und nicht koaxial zum Messstrahl der Trackingeinheit und durch eine separate Austrittsoptik tritt. Dabei weist die Einfangeinheit vorzugsweise eigene Leuchtmittel auf. Ferner können die Einfangeinheit und die Trackingeinheit beide mit Infrarotlicht arbeiten (d.h. auf Infrarot empfindlich sein), wobei vorzugsweise spektrale Empfindlichkeitsbereiche der Einfangeinheit und der Trackingeinheit bezüglich einfallenden Lichts voneinander verschieden sind, und insbesondere einander nicht überlappen. Die beiden Einheiten reagieren also nicht auf das Licht der jeweils anderen Einheit.

In einer weiteren bevorzugten Ausführungsform der Erfindung weist die Einfangeinheit einen Bildsensor zur Erfassung eines Bildes des Zieles. Es liegt also nicht lediglich ein PSD vor, welches nur X und Y-Positionssignale eines Lichtpunktes liefert, sondern ein komplettes Bild, anhand dessen einerseits, wie beim PSD, Messwerte zur Verfolgung des Zieles, aber auch weitere Funktionen des Lasertrackers realisiert werden können. Solche weiteren Funktionen sind beispielsweise die Bestimmung der Orientierung des Ziels, die Identifikation eines Objektes als Ziel, das Verfolgen eines Objektes anhand von optischen Merkmalen ("feature detection and object tracking"). Damit können also auch nicht punktförmige Objekte oder ganze Lichtpunktanordnungen identifiziert und verfolgt werden. Weitere bevorzugte Ausführungsformen gehen aus den abhängigen Patentansprüchen hervor. Dabei sind Merkmale der Verfahrensansprüche sinngemäss mit den Vorrichtungsansprüchen kombinierbar und umgekehrt.

### KURZE BESCHREIBUNG DER ZEICHNUNGEN

Im folgenden wird der Erfindungsgegenstand anhand von bevorzugten Ausführungsbeispielen, welche in den beiliegenden Zeichnungen dargestellt sind, näher erläutert. Es zeigen jeweils schematisch:
- Figur 1 bis 3: verschiedene Ausführungsformen der Erfindung; und
- Figur 4 und 5: Flussdiagramme entsprechend beispielhaften Realisierungen des erfinderischen Verfahrens.

Die in den Zeichnungen verwendeten Bezugszeichen und deren Bedeutung sind in der Bezugszeichenliste zusammengefasst aufgelistet. Grundsätzlich sind in den Figuren gleiche Teile mit gleichen Bezugszeichen versehen.

### WEGE ZUR AUSFÜHRUNG DER ERFINDUNG

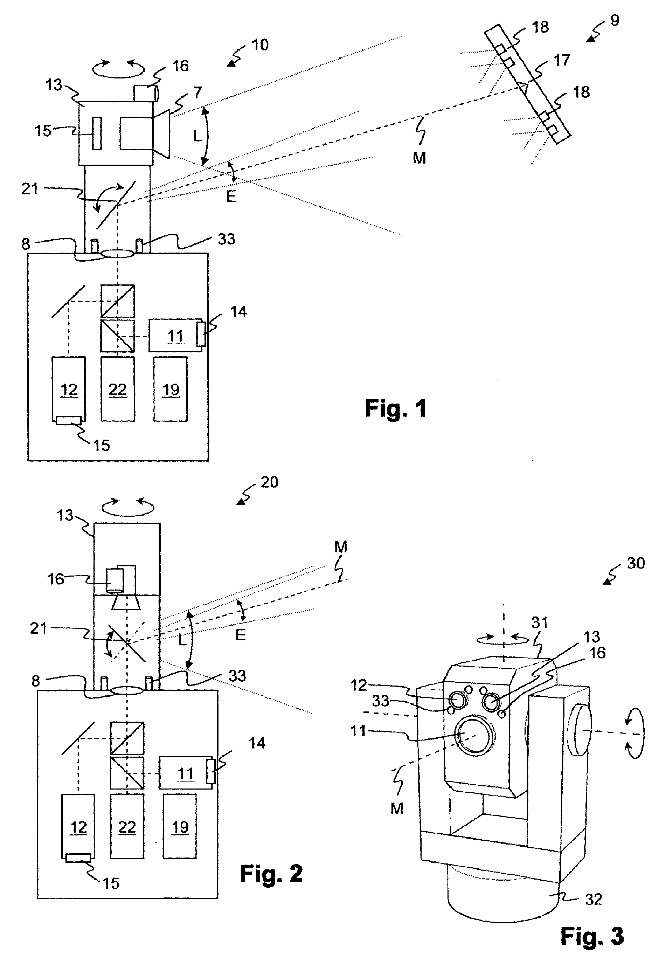

**Figur 1** zeigt eine Struktur eines Lasertrackers 10 in einer ersten bevorzugten Ausführungsform der Erfindung. Der Lasertracker 10 weist eine Trackingeinheit 11 mit einem Messtrahl M, eine Einfangeinheit 12 mit einem Einfangbereich E, und ein Übersichtsgerät 13 zur Lokalisierung, mit einem Lokalisierungsberich L auf. Der Lasertracker 10 ermittelt Azimuth und Elevation sowie den Abstand eines Zieles 9, vorzugsweise eines Retroreflektors 17 am Ziel 9, bezüglich des Lasertrackers 10. Zur Bestimmung und Verfolgung des Zielabstandes liegen in einer Distanzmesseinheit 22 ein Absolutdistanzmesser (ADM) und/oder ein interferometrischer Entfernungsmesser (IFM) vor. Das Übersichtsgerät 13 kann eine Zoomfunktion aufweisen.

Die Trackingeinheit 11 und die Einfangeinheit 12 verwenden eine gemeinsame Austrittsoptik 8, d.h. dass Licht von und zu den beiden Einheiten auf einen gemeinsamen Strahlengang eingekoppelt wird. Dieser enthält den Messstrahl und wird mittels eines motorisch angetriebenen Trackingspiegels 21 auf einen Reflektor 17, beispielsweise einen Retroflektor wie ein Würfeleckenprisma oder einen Tripelspiegel, ausgerichtet.

Die Trackingeinheit 11 weist einen Bildsensor oder aber ein PSD 14 (position sensitive device) auf, welche Signale entsprechend dem Ort eines Lichtpunktes auf einer Fläche des PSD erzeugt. Die Trackingeinheit 11 arbeitet in bekannter Weise durch Ermitteln der Position des reflektierten Messtrahles M auf dem PSD 14, zur Korrektur der Ausrichtung des Messtrahles M mittels der Rechen- und Steuereinheit 19 und Aktoren zur Bewegung des Trackingspiegels 21. Die Trackingeinheit 11 ist also für das hochpräzise Nachführen des Messtrahles veranwortlich, und weist dazu einen Erfassungsbereich mit kollimiertem (parallelen) Messlicht mit einer Breite des Messlichtstrahles von z.B. 1 mm bis 2 mm auf.

Die Einfangeinheit 12 weist eine Kamera respektive einen zweidimensionalen Bildsensor 15 auf. Ein Lichtstrahl erzeugt auf dem Bildsensor 15 einen Lichtpunkt. Dieser Lichtstrahl kann der reflektierte Messtrahl sein (d.h. ein Teil des vom Messtrahl ausgekoppelten Lichts), oder ein zweiter Strahl, der vorzugsweise koaxial zum Messtrahl M verläuft und in dessen Strahlengang eingekoppelt ist, aber eine andere Wellenlänge aufweist. Die Einfangeinheit 12 ermöglicht das Einfangen eines bewegten Zieles und den Übergang zur Zielverfolgung mittels der Trackingeinheit 11 auch während der Bewegung des Zieles. Ein vom Bildsensor 15 erfasster Öffnungswinkel beträgt vorzugsweise rund ±5°, also von total 10°.

Das Übersichtsgerät 13 kann mindestens um die vertikale Achse, optional auch um eine Elevationsachse, zusammen mit der Ausrichtung des Messstrahles drehbar sein. Das Übersichtsgerät 13 weist optional Beleuchtungsmittel 16 auf, mittels welcher am Ziel befestigte (nicht eingezeichnete) reflektierende Elemente beleuchtet werden können und damit für das Übersichtsgerät 13 besser sichtbar werden. Es ist auch möglich, dass die Beleuchtungsmittel 16 dazu ausgebildet sind, mit dem Ziel zu kommunizieren. Der Reflektor 17 ist vorzugsweise mit Leuchtmitteln 18 versehen, um von dem Übersichtsgerät 13 erkannt zu werden. Reflektor 17 und Leuchtmittel 18 sind an einem Ziel 9 angeordnet, welches beispielsweise mit einer Tastspitze versehen sein kann. Die Leuchtmittel 18 können auch verwendet werden, um mittels des Übersichtsgerätes oder einer am Lasertracker 10 angeordneten weiteren Kamera die Orientierung des Ziels 9 zu bestimmen, so dass alle sechs Freiheitsgrade des Ziels 9 bestimmbar sind. Das Übersichtsgerät 13 ist vorzugsweise eine Kamera, welche auf Licht im sichtbaren Bereich empfindlich ist. Ein vom Bildsensor 15 erfasster Öffnungswinkel beträgt vorzugsweise rund ±5 bis ±15°. Das Übersichtsgerät 13 liefert Bilddaten zur Auswertung an eine Rechen- und Steuereinheit 19.

Die Daten der Einfangeinheit 12 und der Trackingeinheit 11 werden ebenfalls durch die Rechen- und Steuereinheit 19 verarbeitet und bei der Steuerung des Ausrichtung des Messstrahles M zum Verfolgen des Reflektors 17 verwendet. Die Rechen- und Steuereinheit 19 ist dazu zur Ausführung des Verfahrens gemäss der Erfindung eingerichtet, insbesondere programmiert.

Der Erfassungsbereich respektive das Blickfeld oder der Öffnungswinkel der Einfangeinheit 12 ist also grösser als jener der Trackingeinheit 11, und der Erfassungsbereich des Übersichtsgerätes 13 grösser als jener der Einfangeinheit 12. In der Regel sind die maximalen Öffnungswinkel in der horizontalen Richtung annähernd gleich jenen in der vertikalen Richtung. Die Öffnungswinkel sind dann in beide Richtungen jeweils kleiner oder grösser als die Öffnungswinkel der anderen Einheiten.

**Figur 2** zeigt eine Struktur eines Trackers 20 mit zuschaltbarem Übersichtsgerät 13 gemäss einer zweiten bevorzugten Ausführungsform der Erfindung. Dabei werden im Folgenden nur Merkmale beschrieben, welche sich von der ersten Ausführungsform unterscheiden: Das Übersichtsgerät 13 ist hier nicht direkt auf den Reflektor 17 ausgerichtet. Stattdessen ist eine Austrittsoptik des Übersichtsgerätes 13 auf den Trackingspiegel 21 gerichtet. Um das Übersichtsgerät 13 zu betreiben, wird der Trackingspiegel 21 gekippt, so dass das Übersichtsgerät 13 durch den Trackingspiegel 21 zum Reflektor 17 sieht. Dadurch ist kein eigener mechanischer Antrieb zur Ausrichtung des Übersichtsgerätes 13 erforderlich. Es kann dadurch das Übersichtsgerät 13 nicht gleichzeitig mit der Trackingeinheit 11 oder der Einfangeinheit 12 betrieben werden.

**Figur 3** zeigt eine Struktur eines Kompaktgerätes 30 gemäss einer dritten bevorzugten Ausführungsform der Erfindung. Dabei werden im Folgenden nur Merkmale beschrieben, welche sich von der ersten Ausführungsform unterscheiden: Es sind die Trackingeinheit 11, die Einfangeinheit 12 und das Übersichtsgerät 13 gemeinsam bewegt an einem Träger 31 angeordnet. Sie sind also in einer fixen Relation zueinander angeordnet, und werden gemeinsam durch motorisch angetriebene Bewegung des Trägers 31 bezüglich einer Basis 32 auf den Reflektor 17 ausgerichtet. Die Einfangeinheit 12 und die Trackingeinheit 11 weisen hier jeweils eine eigene Austrittsoptik auf, können aber auch eine einzige, gemeinsame Austrittsoptik aufweisen. Nebst den Beleuchtungsmitteln 16 für das Übersichtsgerät 13 liegen auch weitere Leuchtmittel 33 für die Einfangeinheit 12 vor. Vorzugsweise strahlen diese weiteren Leuchtmittel 33 Licht im Infrarotbereich ab, und ist die Einfangeinheit 12 nur im Infrarotbereich empfindlich. Die Trackingeinheit 11 weist vorzugsweise einen Bilderfassungssensor auf, um die Abweichung des erfassten Messtrahles von der Sollposition zu erfassen..

**Figur 4** zeigt eine bevorzugte Variante des Ablaufs des erfindungsgemässen Verfahrens. Im ordentlichen Tracking-Modus wird geprüft, ob der Messstrahl M des Lasertrackers durch das Ziel 9 respektive den Reflektor 17 reflektiert und für die Trackingeinheit 11 sichtbar ist (erste Entscheidung 202 "LOCKED?" bezüglich Detektion des reflektierten Messstrahles).

Ist dies der Fall, so wird in einer ersten Nachführoperation 203 "MEAS/ADJ" die Lage des reflektierten Messstrahles in der Trackingeinheit 11 (also beispielsweise auf einem PSD 14) ermittelt, daraus eine Korrekturbewegung errechnet, und der Messstrahl M entsprechend nachgeführt. Anschliessend wird mit dem Schritt der ersten Entscheidung 202 weitergefahren.

Ist dies *nicht* der Fall, so wird geprüft, ob das Ziel 9 für die Einfangeinheit 12 sichtbar ist. Vorzugsweise geschieht dies ebenfalls anhand des Messstrahles M, aber anhand dessen Projektion auf den Bildsensor 15 (zweite Entscheidung 204 "CATCH?" bezüglich Detektion des Zieles).

Ist dies der Fall, so wird in einer zweiten Nachführoperation 205 "MEAS/ADJ" die Lage des reflektierten Messstrahles in der Einfangeinheit 12 ermittelt, daraus eine Korrekturbewegung errechnet, und der Messstrahl M entsprechend nachgeführt. Anschliessend wird in einer dritten Entscheidung 206 "LOCKING?" bezüglich Detektion des reflektierten Messstrahles geprüft, ob der Messstrahl M für die Trackingeinheit 11 sichtbar ist.
▪ Ist dies der Fall, so wird vorzugsweise eine Absolutdistanzmessung aktualisiert oder neu durchgeführt (Absolutdistanzinitialisierung 207 "ADMinit"). Anschliessend wird mit dem Schritt der ersten Entscheidung 202 weitergefahren.
▪ Ist dies *nicht* der Fall, wird mit dem Schritt der zweiten Entscheidung 204 weitergefahren.

Ist das Ziel 9 für die Einfangeinheit 12 *nicht* sichtbar, so wird geprüft, ob das Ziel 9 für das Übersichtsgerät 13 sichtbar ist (vierte Entscheidung 208 "OVC?")bezüglich Sichtbarkeit des Zieles). Vorzugsweise geschieht dies anhand der Reflektion von Licht des Beleuchtungsmittels 16 am Ziel, und/oder anhand der Leuchtmittel 18 am Ziel 9. Vorzugsweise arbeiten diese Leuchtmittel und das Übersichtsgerät 13 mit Licht im sichtbaren Bereich.
▪ Ist das Ziel 9 für das Übersichtsgerät 13 sichtbar, so wird in einer dritten Nachführoperation 209 "MEAS/ADJ" die Lage des reflektierten Messstrahles im Übersichtsgerät 13 ermittelt, daraus eine Korrekturbewegung errechnet, und der Messstrahl M entsprechend nachgeführt. Anschliessend wird mit dem Schritt der zweiten Entscheidung 204 weitergefahren.
▪ Ist das Ziel 9 für das Übersichtsgerät 13 *nicht* sichtbar, so wird beispielsweise eine Suchroutine 210 "SRCH" durchgeführt. Solche Suchroutinen sind an sich bekannt. Beispielsweise wird die Ausrichtung des Trackers oder mindestens der optischen Blickachse des Übersichtsgerätes 13 nach einem vorgegebenen Muster geändert und dabei dauernd überprüft, ob das Ziel 9 auf dem der jeweiligen Ausrichtung entsprechenden Bild des Übersichtsgerätes 13 findbar ist oder nicht (vierte Entscheidung 208). Bleibt beispielsweise die Suche während einer vorgegebenen Zeit oder nach Ablauf einer vollständigen Routine erfolglos, kann sich das System gegebenenfalls mit entsprechender Mitteilung an die Bedienungsperson stoppen.

Bei einem Start 201 des Messsystems wird vorzugsweise mit der Zielsuche mit dem grössten Blickwinkel, also mit der vierten Entscheidung 208 bezüglich Sichtbarkeit des Zieles begonnen. In einer anderen bevorzugten Ausführungsform der Erfindung (nicht in der Figur dargestellt) beginnt das Verfahren, indem das Ziel mit dem Reflektor 17 manuell in den Erfassungsbereich der Trackingeinheit 11 bewegt wird und automatisch von der Trackingeinheit 11 erfasst und dann verfolgt wird. Darauf wird die Absolutdistanzmessung erstmals durchgeführt (analog zu "ADMinit").

In einer Variante der Erfindung wird, wenn gemäss der ersten Entscheidung 202 der reflektierte Messstrahl *nicht* in der Trackingeinheit 11 erfasst wird, das Verfahren nicht mit der zweiten Entscheidung 204, sondern mit der vierten Entscheidung 208 bezüglich Sichtbarkeit des Zieles fortgesetzt (strichlierter Pfeil in der **Figur 4**).

**Figur 5** zeigt eine weitere Variante des Ablaufs des erfindungsgemässen Verfahrens für den Fall, dass das Übersichtsgerät 13 eine Zoomfunktion aufweist: Der strichliert umrandete Teil der Figur 4 kann dann durch die Elemente der Figur 5 ersetzt werden. Das Verfahren verläuft dann wie folgt:
Ist in der vierten Entscheidung 208 "OVC?" das Ziel 9 für das Übersichtsgerät 13 *nicht* sichtbar, so wird zunächst in einem Schritt der Blickwinkelöffnung 311 "ZOOMOUT" das Zoomobjektiv 7 auf einen grösseren Blickwinkel oder Erfassungswinkel eingestellt und in einer fünften Entscheidung 312 "VIS?" bezüglich Sichtbarkeit des Zieles geprüft, ob das Ziel 9 für das Übersichtsgerät 13 sichtbar ist.
   ▪ Ist das Ziel 9 für das Übersichtsgerät 13 nicht sichtbar, so wird beispielsweise eine Suchroutine 210 "SRCH" durchgeführt, wie oben beschrieben.
   ▪ Ist das Ziel 9 für das Übersichtsgerät 13 sichtbar, so wird in einer vierten Nachführoperation 313 "MEAS/ADJ" die Lage des reflektierten Messstrahles im Übersichtsgerät 13 ermittelt, daraus eine Korrekturbewegung errechnet, und der Messstrahl M entsprechend nachgeführt. Es wird in einem Schritt der Blickwinkelverkleinerung 314 "ZOOMIN" das Zoomobjektiv 7 wieder auf einen kleineren Blickwinkel eingestellt, und mit dem Schritt der vierten Entscheidung 208 weitergefahren.

Grundsätzlich sind natürlich auch weitere Varianten in der Abfolge der genannten Schritte möglich, welche zum selben Ergebnis führen.

In einer bevorzugten Ausführungsform der Erfindung sind die Lage der Leuchtmittel 18 am Ziel 9 bekannt, und bestimmt das Übersichtsgerät 13 bereits während des Einfangens, also noch während des ausserordentlichen Tracking-Modus, anhand der Abbildung der Leuchtmittel im Übersichtsgerät 13 zumindest eine Schätzung der Orientierung des Zieles 9. Solche Verfahren zum Bestimmen der Orientierung eines Zieles 9 sind bekannt, jedoch nur im Zusammenhang mit einem normalen Tracking-Modus, in welchem die Distanz zwischen Tracker und Ziel genau bekannt ist.

### BEZUGSZEICHENLISTE

| | | | |
|---|---|---|---|
| 7 | Zoom-Optik | 19 | Rechen- und Steuereinheit |
| 8 | gemeinsame Austrittsoptik | 20 | Tracker mit zuschaltbarem |
| 9 | Ziel | | Übersichtsgerät |
| 10 | Lasertracker | 21 | Trackingspiegel |
| 11 | Trackingeinheit | 22 | Absolutdistantmesser ADM |
| 12 | Einfangeinheit | | und Interferometer IFM |
| 13 | Übersichtsgerät zur | 30 | Kompaktgerät |
| | Lokalisierung | 31 | Träger |
| 14 | PSD | 32 | Basis |
| 15 | Bildsensor | 33 | Leuchtmittel für Einfangeinheit |
| 16 | Beleuchtungsmittel | M | Messstrahl |
| 17 | Reflektor | E | Einfangbereich |
| 18 | Leuchtmittel am Ziel | L | Lokalisierungsbereich |

## Patentansprüche

1. Tracking-Verfahren, in dem ein mit einem Reflektor (17) ausgerüstetes Ziel (9) von einem Messstrahl (M) eines Lasertrackers (10) verfolgt wird, wobei in einem normalen Tracking-Modus in einer Trackingeinheit (11) der vom Reflektor (17) reflektierte Messstrahl detektiert und aus der Detektion eine Grösse zur Steuerung der Ausrichtung des Messstrahles (M) berechet wird, **wobei** zusätzlich in einem ausserordentlichen Tracking-Modus, in welchem in der Trackingeinheit (11) der vom Reflektor (17) reflektierte Messstrahl nicht detektiert wird, Grössen zur Steuerung der Ausrichtung des Messstrahles (M) aus Daten berechnet werden, die von mindestens einem weiteren Gerät erfasst werden,
**dadurch gekennzeichnet, dass**
der Lasertracker (10) eine Einfangeinheit (12) und ein Übersichtsgerät (13) aufweist, wobei sowohl die Einfangeinheit (12) als auch das Übersichtsgerät (13) eine relativ zum Messstrahl (M) bekannte Position und Orientierung aufweisen, die Einfangeinheit (12) einen Erfassungsbereich aufweist, welcher zwischen dem Erfassungsbereich der Trackingeinheit (11) und dem Erfassungsbereich des Übersichtsgerätes (13) liegt, und
das Verfahren im ausserordentlichen Tracking-Modus die folgenden Schritte aufweist:
▪ falls das Ziel (9) durch die Einfangeinheit (12) erfassbar ist, Steuerung (205) der Ausrichtung des Messstrahles (M) nach Massgabe eines Winkels, unter welchem das Ziel (9) für die Einfangeinheit (12) sichtbar ist, und Überprüfen, ob das Ziel (9) für die Trackingeinheit (11) erfassbar ist;
▪ falls dann das Ziel (9) für die Trackingeinheit (11) erfassbar ist, Übergang zum normalen Tracking-Modus;
▪ falls das Ziel (9) nur für das Übersichtsgerät (13) erfassbar ist, Steuerung (209) der Ausrichtung des Messstrahles (M) nach Massgabe eines Winkels, unter welchem das Ziel (9) für das Übersichtsgerät (13) sichtbar ist, und Überprüfen, ob das Ziel (9) für die Einfangeinheit (12) erfassbar ist.

2. Verfahren gemäss Anspruch 1, wobei die beschriebenen Schritte wiederholt ausgeführt werden, bis der Übergang zum normalen Tracking-Modus erfolgt.

3. Verfahren gemäss Anspruch 1 oder 2, wobei beim Übergang zum normalen Tracking-Modus der folgende Schritt ausgeführt wird:
▪ Durchführen einer Absolutdistanzinitialisierung (207) zum Bestimmen einer Absolutdistanz zwischen Lasertracker (10) und Ziel (9).

4. Verfahren gemäss einem der bisherigen Ansprüche, wobei das Übersichtsgerät (13) eine Zoomfunktion und damit einen verstellbaren Erfassungswinkel aufweist, und falls das Ziel (9) bei einem kleinen Erfassungswinkel nicht für das Übersichtsgerät (13) erfassbar ist, die folgenden Schritte durchgeführt werden:
▪ Vergrössern (311) des Erfassungswinkels des Übersichtsgerätes (13), und Überprüfen, ob das Ziel (9) für das Übersichtsgerät (13) erfassbar ist;
▪ falls das Ziel (9) für das Übersichtsgerät (13) erfassbar ist, Steuerung (313) der Ausrichtung des Messstrahles (M) nach Massgabe des Winkels, unter welchem das Ziel (9) für das Übersichtsgerät (13) sichtbar ist; und
▪ Verkleinern (314) des Erfassungswinkels des Übersichtsgerätes (13); oder
▪ optional, falls das Ziel (9) für das Übersichtsgerät (13) nicht erfassbar ist, Ausführen einer Suchroutine (210) zur Lokalisierung des Ziels (9) durch Bewegen des Übersichtsgerätes (13).

5. Verfahren gemäss einem der bisherigen Ansprüche, wobei mittels einer Umlenkeinrichtung (21) wahlweise
▪ entweder, in einer ersten Betriebsart der Umlenkeinrichtung (21), die Trackingeinheit (11) und die Einfangeinheit (12),
▪ oder, in einer zweiten Betriebsart der Umlenkeinrichtung (21), das Übersichtsgerät (13)
mit ihrem Strahlengang auf das Ziel (9) ausrichtbar sind, und das Verfahren die Schritte aufweist:
▪ Arbeiten in der ersten Betriebsart, oder Wechsel zur ersten Betriebsart, wenn die Trackingeinheit (11) oder die Einfangeinheit (12) das Ziel (9) erfassen, verfolgen oder suchen;
▪ Arbeiten in der zweiten Betriebsart, oder Wechsel zur zweiten Betriebsart, wenn das Übersichtsgerät (13) das Ziel (9) erfasst oder sucht.

6. Messsystem mit Lasertracker (10), mit dem ein mit einem Reflektor (17) ausgerüstetes Ziel (9) von einem Messstrahl (M) eines Lasertrackers (10) verfolgbar ist, wobei der Lasertracker (10) dazu ausgerüstet ist, in einem normalen Tracking-Modus mit einer Trackingeinheit (11) den vom Reflektor (17) reflektierten Messstrahl zu detektieren und aus der Detektion eine Grösse zur Steuerung der Ausrichtung des Messstrahles (M) zu berechnen, **wobei** zusätzlich der Lasertracker (10) dazu ausgerüstet ist, in einem ausserordentlichen Tracking-Modus, in welchem in der Trackingeinheit (11) der vom Reflektor (17) reflektierte Messstrahl nicht detektierbar ist, Grössen zur Steuerung der Ausrichtung des Messstrahles (M) aus Daten zu berechnen, welche von mindestens einem weiteren Gerät erfasst sind,
**dadurch gekennzeichnet, dass**
der Lasertracker (10) eine Einfangeinheit (12) und ein Übersichtsgerät (13) aufweist, wobei sowohl die Einfangeinheit (12) als auch das Übersichtsgerät (13) eine relativ zum Messstrahl (M) bekannte Position und Orientierung aufweisen,
die Einfangeinheit (12) einen Erfassungsbereich aufweist, welcher zwischen dem Erfassungsbereich der Trackingeinheit (11) und dem Erfassungsbereich des Übersichtsgerätes (13) liegt, und
der Lasertracker (10) dazu ausgerüstet ist, im ausserordentlichen Tracking-Modus:
▪ falls das Ziel (9) durch die Einfangeinheit (12) erfassbar ist, die Ausrichtung des Messstrahles (M) nach Massgabe eines Winkels zu steuern (205), unter welchem Winkel das Ziel (9) für die Einfangeinheit (12) sichtbar ist, und zu Überprüfen, ob das Ziel (9) für die Trackingeinheit (11) erfassbar ist;
▪ falls das Ziel (9) für die Trackingeinheit (11) erfassbar ist, einen Übergang zum normalen Tracking-Modus einzuleiten;
▪ falls das Ziel (9) nur für das Übersichtsgerät (13) erfassbar ist, die Ausrichtung des Messstrahles (M) nach Massgabe eines Winkels zu steuern (209), unter welchem das Ziel (9) für das Übersichtsgerät (13) sichtbar ist, und zu Überprüfen, ob das Ziel (9) für die Einfangeinheit (12) erfassbar ist.

7. Messsystem mit Lasertracker (10) gemäss Anspruch 6, wobei die Einfangeinheit (12) denselben Messstrahl (M) wie die Trackingeinheit (11) zur Bestimmung der Position des Reflektors (17) in ihrem Blickfeld verwendet.

8. Messsystem mit Lasertracker (10) gemäss Anspruch 6, wobei die Einfangeinheit (12) Messlicht aussendet, welches koaxial zum Messstrahl (M) der Trackingeinheit (11) und mit diesem durch eine gemeinsame Austrittsoptik (8) tritt.

9. Messsystem mit Lasertracker (10) gemäss Anspruch 7 oder 8, wobei der Strahlengang des Messstrahles - und des Messlichtes der Einfangeinheit (12), falls dieses nicht identisch mit dem Messstrahl ist - durch eine Umlenkeinrichtung (21) auf das Ziel (9) lenkbar ist.

10. Messsystem mit Lasertracker (10) gemäss Anspruch 9, wobei mittels der Umlenkeinrichtung (21) wahlweise
▪ entweder, in einer ersten Betriebsart der Umlenkeinrichtung (21), die Trackingeinheit (11) und die Einfangeinheit (12),
▪ oder, in einer zweiten Betriebsart der Umlenkeinrichtung (21), das Übersichtsgerät (13)
mit ihrem Strahlengang auf das Ziel (9) ausrichtbar sind.

11. Messsystem mit Lasertracker (10) gemäss Anspruch 6, wobei die Einfangeinheit (12) Messlicht aussendet, welches parallel und nicht koaxial zum Messstrahl (M) der Trackingeinheit (11) und durch eine separate Austrittsoptik tritt.

12. Messsystem mit Lasertracker (10) gemäss Anspruch 11, wobei die Einfangeinheit (12) eigene Leuchtmittel (33) aufweist.

13. Messsystem mit Lasertracker (10) gemäss Anspruch 12, wobei die Einfangeinheit (12) und die Trackingeinheit (11) beide mit Infrarotlicht arbeiten, und spektrale Empfindlichkeitsbereiche der Einfangeinheit (12) und der Trackingeinheit (11) bezüglich einfallendes Licht voneinander verschieden sind, und insbesondere einander nicht überlappen.

14. Messsystem mit Lasertracker (10) gemäss einem der Ansprüche 6 bis 13, wobei das Übersichtsgerät (13) eine Zoom-Optik (7) aufweist.

15. Messsystem mit Lasertracker (10) gemäss einem der Ansprüche 6 bis 14, wobei die Einfangeinheit (12) einen Bildsensor zur Erfassung eines Bildes des Zieles (9) und zur Ermittlung von Messwerten zur Verfolgung des Zieles (9) aufweist.

## Claims

1. A tracking method, in which a target (9) provided with a reflector (17) is tracked by a measurement beam (M) of a laser tracker (10), wherein in a normal tracking mode, in a tracking unit (11), the measurement beam reflected by the reflector (17) is detected and a variable for the control of the alignment of the measurement beam (M) is computed from the detection,
**wherein** additionally in an extraordinary tracking mode, in which, in the tracking unit (11), the measurement beam reflected by the reflector (17) is not detected, variables for the control of the alignment of the measurement beam (M) are computed from data which is acquired by at least one further apparatus,
**characterized in that**
the laser tracker (10) comprises a capture unit (12) and an overview apparatus (13), wherein the capture unit (12) as well as the overview apparatus (13) have a known position and orientation relative to the measurement beam (M),
the capture unit (12) comprises a detection region which lies between the detection region of the tracking unit (11) and the detection region of the overview apparatus (13), and
the method in the extraordinary tracking mode comprises the following steps:
• in the case that the target (9) is detectable by the capture unit (12), controlling (205) the alignment of the measurement beam (M) in accordance with an angle at which the target (9) is visible to the capture unit (12), and checking as to whether the target (9) can be detected by the tracking unit (11);
• in the case that the target (9) can then be detected by the tracking unit (11), changing over to the normal tracking mode;
• in the case that the target (9) can only be detected by the overview apparatus (13), controlling (209) the alignment of the measurement beam (M) in accordance with an angle at which the target (9) is visible to the overview apparatus (13), and testing as to whether the target (9) can be detected by the capture unit (12).

2. The method according to claim 1, wherein the described steps are carried out repeatedly until the change-over to the normal tracking mode is effected.

3. The method according to claim 1 or 2, wherein with the change-over to the normal tracking mode, the following step is carried out:
• carrying out an absolute distance initialisation (207) for determining an absolute distance between the laser tracker (10) and the target (9).

4. The method according to any one of the preceding claims, wherein the overview apparatus (13) has a zoom function and with this an adjustable detection angle, and in the case that the target (9) is not detectable by the overview apparatus (13) given a small detection angle, the following steps are carried out:
• enlarging (311) the detection angle of the overview apparatus (13), and checking as to whether the target (9) can be detected by the overview apparatus (13);
• in the case that the target (9) can be detected by the overview apparatus (13), controlling (313) the alignment of the measurement beam (M) in accordance with the angle at which the target (9) is visible to the overview apparatus (13); and
• reducing (314) the detection angle of the overview apparatus (13); or
• optionally, in the case that the target (9) cannot be detected by the overview apparatus (13), carrying out a search routine (210) for localising the target (9) by way of moving the overview apparatus (13).

5. The method according to any one of the preceding claims, wherein selectively, by way of a deflection device (21):
• either, in a first operating mode of the deflection device (21), the tracking unit (11) and the capture unit (12),
• or, in a second operating mode of the deflection device (21), the overview apparatus (13)
can be aligned with their beam path onto the target (9), and the method has the steps of:
• operating in the first operating mode, or changing to the first operating mode, when the tracking unit (11) or the capture unit (12) detect, track or search the target (9) ;
• operating in the second operating mode, or changing to the second operating mode, when the overview apparatus (13) detects or searches the target (9).

6. A measurement system comprising a laser tracker (10), with which a target (9) provided with a reflector (17) can be tracked by a measurement beam (M) of a laser tracker (10), wherein the laser tracker (10) is designed, in a normal tracking mode, with a tracking unit (11), to detect the measurement beam (M) reflected by the reflector (17) and to compute a variable for the control of the alignment of the measurement beam (M) from the detection, **wherein** additionally, in an extraordinary tracking mode, in which the measurement beam reflected by the reflector (17) cannot be detected in the tracking unit (11), the laser tracker (10) is designed to compute variables for the control of the alignment of the measurement beam (M) from data which is acquired by at least one further apparatus, **characterized in that**
the laser tracker (10) comprises a capture unit (12) and an overview apparatus (13), wherein the capture unit (12) as well as the overview apparatus (13) have a known position and orientation relative to the measurement beam (M),
the capture unit (12) comprises a detection region which lies between the detection region of the tracking unit (11) and the detection region of the overview apparatus (13), and
the laser tracker (10) is designed, in the extraordinary tracking mode:
• in the case that the target (9) can be detected by the capture unit (12), to control (205) the alignment of the measurement beam (M) in accordance with an angle at which the target (9) is visible to the capture unit (12), and to check as to whether the target (9) can be detected by the tracking unit (11);
• in the case that the target (9) can be detected by the tracking unit (11), to initiate a change-over to the normal tracking mode;
• in the case that the target (9) can be detected only by the overview apparatus (13), to control (209) the alignment of the measurement beam (M) in accordance with an angle at which the target (9) is visible to the overview apparatus (13), and to check as to whether the target (9) can be detected by the capture unit (12).

7. The measurement system with a laser tracker (10) according to claim 6, wherein the capture unit (12) uses the same measurement beam (M) as the tracking unit (11), for determining the position of the reflector (17) in the capture unit's field of view.

8. The measurement system with a laser tracker (10) according to claim 6, wherein the capture unit (12) emits measurement light which is coaxial to the measurement beam (M) of the tracking unit (11) and with this measurement beam passes through common exit optics (8).

9. The measurement system with a laser tracker (10) according to claim 7 or 8, wherein the beam path of the measurement beam - and of the measurement light of the capture unit (12), in the case that this is not identical to the measurement beam - can be guided onto the target (9) by way of a deflection device (21).

10. The measurement system with a laser tracker (10) according to claim 9, wherein by way of the deflection device (21), selectively
• either, in a first operating mode of the deflection device (21), the tracking unit (11) and the capture unit (12)
• or, in a second operating mode of the deflection unit (21), the overview apparatus (13)
can be directed with their beam path onto the target (9).

11. The measurement system with a laser tracker (10) according to claim 6, wherein the capture unit (12) emits measurement light which is parallel and not coaxial to the measurement beam (M) of the tracking unit (11) and goes through separate exit optics.

12. The measurement system with a laser tracker (10) according to claim 11, wherein the capture unit (12) comprises its own illumination means (33).

13. The measurement system with a laser tracker(10) according to claim 12, wherein the capture unit (12) and the tracking unit (11) both operate with infrared light, and spectral sensitivity regions of the capture unit (12) and of the tracking unit (11) with respect to incident light are different from one another and particularly do not overlap one another.

14. The measurement system with a laser tracker (10) according to one of claims 6 to 13, wherein the overview apparatus (13) comprises zoom optics (7).

15. The measurement system with a laser tracker (10) according to one of claims 6 to 14, wherein the capture unit (12) comprises a picture sensor for detecting a picture of the target (9) and for determining measurement values for tracking the target (9).

## Revendications

1. Procédé de suivi dans lequel une cible (9) équipée d'un réflecteur (17) est suivie par un faisceau de mesure (M) d'un appareil de suivi laser (10), cependant que le faisceau de mesure réfléchi par le réflecteur (17) est détecté dans un mode de suivi normal dans une unité de suivi (11) et une grandeur pour la commande de l'orientation du faisceau de mesure (M) est calculée à partir de la détection, cependant qu'en plus dans un mode de suivi exceptionnel dans lequel le faisceau de mesure réfléchi par le réflecteur (17) n'est pas détecté dans l'unité de suivi (11), des grandeurs pour la commande de l'orientation du faisceau de mesure (M) sont calculées à partir de données qui sont détectées par au moins un autre appareil,
**caractérisé en ce que** l'appareil de suivi laser (10) présente une unité de captage (12) et un appareil de prise de vue (13), cependant que l'unité de captage (12) aussi bien que l'appareil de prise de vue (13) présentent une position et une orientation connue par rapport au faisceau de mesure (M), l'unité de captage (12) présente une plage de détection qui se situe entre la plage de détection de l'unité de suivi (11) et la plage de détection de l'appareil de prise de vue (13) et le procédé présente, dans le mode de suivi exceptionnel, les étapes suivantes :
▪ au cas où la cible (9) peut être détectée par l'unité de captage (12), commande (205) de l'orientation du faisceau de mesure (M) en fonction d'un angle dans lequel la cible (9) est visible pour l'unité de captage (12) et vérification si la cible (9) peut être détectée pour l'unité de suivi (11) ;
▪ au cas où la cible (9) peut alors être détectée pour l'unité de suivi (11), passage au mode de suivi normal ;
▪ au cas où la cible (9) ne peut être détectée que pour l'appareil de prise de vue (13), commande (209) de l'orientation du faisceau de mesure (M) en fonction d'un angle dans lequel la cible (9) est visible pour l'appareil de prise de vue (13) et vérification si la cible (9) peut être détectée pour l'unité de captage (12).

2. Procédé selon la revendication 1, les étapes décrites étant réalisées de manière répétée jusqu'à ce que le passage au mode de suivi normal ait lieu.

3. Procédé selon la revendication 1 ou 2, l'étape suivante étant réalisée lors du passage au mode de suivi normal :
▪ réalisation d'une initialisation de la distance absolue (207) pour déterminer une distance absolue entre l'appareil de suivi laser (10) et la cible (9).

4. Procédé selon l'une des revendications précédentes, cependant que l'appareil de prise de vue (13) présente une fonction de zoom et donc un angle de détection réglable et les étapes suivantes sont réalisées au cas où la cible (9), pour un petit angle de détection, ne peut pas être détectée pour l'appareil de prise de vue (13) :
▪ agrandissement (311) de l'angle de détection de l'appareil de prise de vue (13) et vérification si la cible (9) peut être détectée pour l'appareil de prise de vue (13),
▪ au cas où la cible (9) peut être détectée pour l'appareil de prise de vue (13), commande (313) de l'orientation du faisceau de mesure (M) en fonction de l'angle dans lequel la cible (9) est visible pour l'appareil de prise de vue (13) et
▪ diminution (314) de l'angle de détection de l'appareil de prise de vue (13) ou
▪ en option, au cas où la cible (9) ne peut pas être détectée pour l'appareil de prise de vue (13), réalisation d'une routine de recherche (210) pour la localisation de la cible (9) par déplacement de l'appareil de prise de vue (13).

5. Procédé selon l'une des revendications précédentes, cependant qu'au moyen d'un dispositif de déviation (21) au choix
▪ soit, dans un premier mode du dispositif de déviation (21), l'unité de suivi (11) et l'unité de captage (12),
▪ soit, dans un second mode du dispositif de déviation (21), l'appareil de prise de vue (13)
peuvent être orientés avec leur marche de faisceau sur la cible (9) et le procédé présente les étapes :
▪ travail dans le premier mode, ou changement pour le premier mode, lorsque l'unité de suivi (11) ou l'unité de captage (12) détecte, poursuit ou cherche la cible (9) ;
▪ travail dans le second mode, ou changement pour le second mode, lorsque l'appareil de prise de vue (13) détecte ou cherche la cible (9).

6. Système de mesure avec appareil de suivi laser (10) avec lequel une cible (9) équipée d'un réflecteur (17) peut être suivie par un faisceau de mesure (M) d'un appareil de suivi laser (10), cependant que l'appareil de suivi laser (10) est équipé pour détecter, dans un mode de suivi normal avec une unité de suivi (11), le faisceau de mesure réfléchi par le réflecteur (17) et pour calculer, à partir de la détection, une grandeur pour la commande de l'orientation du faisceau de mesure (M), cependant que l'appareil de suivi laser (10) est équipé en plus pour calculer, dans un mode de suivi exceptionnel dans lequel le faisceau de mesure réfléchi par le réflecteur (17) ne peut pas être détecté dans l'unité de suivi (11), des grandeurs pour la commande de l'orientation du faisceau de mesure (M) à partir de données qui sont détectées par au moins un autre appareil, **caractérisé en ce que** l'appareil de suivi laser (10) présente une unité de captage (12) et un appareil de prise de vue (13), cependant que l'unité de captage (12) aussi bien que l'appareil de prise de vue (13) présentent une position et une orientation connue par rapport au faisceau de mesure (M), l'unité de captage (12) présente une plage de détection qui se situe entre la plage de détection de l'unité de suivi (11) et la plage de détection de l'appareil de prise de vue (13) et l'appareil de suivi laser (10) est équipé pour, dans le mode de suivi exceptionnel,
▪ au cas où la cible (9) peut être détectée par l'unité de captage (12), commander (205) l'orientation du faisceau de mesure (M) en fonction d'un angle dans lequel la cible (9) est visible pour l'unité de captage (12) et vérification si la cible (9) peut être détectée pour l'unité de suivi (11) ;
▪ au cas où la cible (9) peut être détectée pour l'unité de suivi (11), lancement d'un passage au mode de suivi normal ;
▪ au cas où la cible (9) ne peut être détectée que pour l'appareil de prise de vue (13), commander (209) l'orientation du faisceau de mesure (M) en fonction d'un angle dans lequel la cible (9) est visible pour l'appareil de prise de vue (13) et vérification si la cible (9) peut être détectée pour l'unité de captage (12).

7. Système de mesure avec un appareil de suivi laser (10) selon la revendication 6, cependant que l'unité de captage (12) utilise le même faisceau de mesure (M) que l'unité de suivi (11) pour déterminer la position du réflecteur (17) dans leur champ de vision.

8. Système de mesure avec un appareil de suivi laser (10) selon la revendication 6, cependant que l'unité de captage (12) émet de la lumière de mesure qui sort par une optique de sortie commune (8) de manière coaxiale par rapport au faisceau de mesure (M) de l'unité de suivi (11) et avec celui-ci.

9. Système de mesure avec un appareil de suivi laser (10) selon la revendication 7 ou 8, cependant que la marche de faisceau - et de la lumière de mesure de l'unité de captage (12) au cas où celle-ci n'est pas identique au faisceau de mesure - peut être déviée sur la cible (9) par un dispositif de déviation (21).

10. Système de mesure avec un appareil de suivi laser (10) selon la revendication 9, cependant qu'au moyen du dispositif de déviation (21) au choix
▪ soit, dans un premier mode du dispositif de déviation (21), l'unité de suivi (11) et l'unité de captage (12),
▪ soit, dans un second mode du dispositif de déviation (21), l'appareil de prise de vue (13)
peuvent être orientés avec leur marche de faisceau sur la cible (9).

11. Système de mesure avec un appareil de suivi laser (10) selon la revendication 6, cependant que l'unité de captage (12) émet de la lumière de mesure qui sort par une optique de sortie séparée parallèlement et non pas de manière coaxiale par rapport au faisceau de mesure (M) de l'unité de suivi (11).

12. Système de mesure avec un appareil de suivi laser (10) selon la revendication 11, l'unité de captage (12) présentant leurs propres lampes (33).

13. Système de mesure avec un appareil de suivi laser (10) selon la revendication 12, cependant que l'unité de captage (12) et l'unité de suivi (11) travaillent toutes les deux avec de la lumière infrarouge et des plages de sensibilité spectrale de l'unité de captage (12) et de l'unité de suivi (11) sont différentes l'une de l'autre pour ce qui est de la lumière incidente et en particulier ne se chevauchent pas.

14. Système de mesure avec un appareil de suivi laser (10) selon l'une des revendications 6 à 13, l'appareil de prise de vue (13) présentant un zoom optique (7).

15. Système de mesure avec un appareil de suivi laser (10) selon l'une des revendications 6 à 14, cependant que l'unité de captage (12) présente un capteur d'image pour la détection d'une image de la cible (9) et pour déterminer des valeurs de mesure pour la poursuite de la cible (9).
